# EUROPÄISCHE PATENTANMELDUNG

(11) **EP 3 718 810 A1**
(43) Veröffentlichungstag der Anmeldung: **07.10.2020**
(21) Anmeldenummer: 20163396.3
(22) Anmeldetag: 16.03.2020
(51) Int. Cl.: B60K 35/00, B60K 37/06, G06F 3/01

(54) **VERFAHREN UND VORRICHTUNG ZUR BEDIENUNG VON ELEKTRONISCH ANSTEUERBAREN KOMPONENTEN EINES FAHRZEUGS**

(30) Priorität: 01.04.2019 DE 102019204541
(71) Anmelder: Volkswagen Aktiengesellschaft, 38440 Wolfsburg (DE)
(72) Erfinder: Kassner, Astrid, 10117 Berlin (DE)

(57) **Zusammenfassung**

Bei dem erfindungsgemäßen Verfahren zur Bedienung von elektronisch ansteuerbaren Komponenten eines Fahrzeugs wird eine Zeigegeste eines in dem Fahrzeug befindlichen Nutzers in Richtung einer elektronisch ansteuerbaren Komponente sensorisch erfasst (1). Aus der erfassten Zeigegeste wird die elektronisch ansteuerbare Komponente ermittelt (2). Eine Information, welche elektronisch ansteuerbare Komponente selektiert worden ist, wird an den Nutzer ausgegeben (3). Eine Spracheingabe des Nutzers wird erfasst (4). Mittels einer automatischen Spracherkennung und Interpretation der Spracheingabe wird ein die selektierte elektronisch ansteuerbare Komponente betreffender Sprachbefehl ermittelt (5). Die selektierte elektronisch ansteuerbare Komponente wird gemäß dem ermittelten Sprachbefehl angesteuert (6).

## Beschreibung

Die vorliegende Erfindung betrifft ein Verfahren zur Bedienung von elektronisch ansteuerbaren Komponenten eines Fahrzeugs. Die vorliegende Erfindung betrifft weiterhin eine Vorrichtung zur Durchführung des Verfahrens und ein Fahrzeug, das eingerichtet ist, ein solches Verfahren auszuführen oder eine solche Vorrichtung aufweist.

In Kraftfahrzeugen kann eine Bedienung unterschiedlicher Fahrzeugfunktionen mittlerweile vermehrt auch durch Spracheingaben oder Bediengesten des Fahrzeugnutzers erfolgen. So können mittels Raumgesten Bildschirminhalte, beispielsweise von Inhalten eines Infotainmentsystems des Fahrzeugs, bedient werden. Üblicherweise werden diese berührungslos, aber nah des Bildschirms, ausgeführt und stellen eine Alternative zur Touch-Bedienung dar.

Anstelle von Bildschirminhalten kann mit Raumgesten auch die Bedienung von elektronischen Hardwareelementen im Fahrzeug erfolgen, die sich in größerer Entfernung vom Nutzer befinden können. So wird in der DE 10 2015 122 601 A1 beschrieben verschiedene Hardwareelemente, wie beispielsweise eine Schiebetür, eine Klimaanlage, einen Bildschirm oder eine Audiowiedergabeeinrichtung, durch Gesten zu bedienen. Hierbei zeigt der Nutzer zunächst während einer Erkundungsphase mit seinem Arm im Raum umher und bekommt durch Leuchtelemente eine Rückmeldung darüber, welche Hardwareelemente per Geste bedienbar sind. Ist die Zeigegeste direkt auf ein Hardwareelement gerichtet, so wird wiederum durch Leuchtelemente angezeigt welche Bedienmöglichkeiten für dieses Hardwareelement vorliegen. Durch Zeigen in die entsprechende Richtung erfolgt dann die Bedienung des Hardwareelements, wobei auch hier eine visuelle Rückmeldung erfolgen kann. Ähnliche Systeme zur Steuerung von Fahrzeugfunktionen mit Gesten werden auch in der US 2014/0309876 A1 und der WO 2018/057663 A1 offenbart.

Es ist eine Aufgabe der Erfindung, ein verbessertes Verfahren und eine verbesserte Vorrichtung zur Bedienung von elektronisch ansteuerbaren Komponenten eines Fahrzeugs zur Verfügung zu stellen.

Diese Aufgabe wird durch ein Verfahren mit den Merkmalen des Anspruchs 1, sowie durch eine entsprechende Vorrichtung gemäß Anspruch 7 gelöst. Bevorzugte Ausgestaltungen der Erfindung sind Gegenstand der abhängigen Ansprüche.

Bei dem erfindungsgemäßen Verfahren zur Bedienung von elektronisch ansteuerbaren Komponenten eines Fahrzeugs wird
- eine Zeigegeste eines in dem Fahrzeug befindlichen Nutzers in Richtung einer elektronisch ansteuerbaren Komponente sensorisch erfasst;
- aus der erfassten Zeigegeste die elektronisch ansteuerbare Komponente ermittelt;
- eine Information an den Nutzer ausgegeben, welche elektronisch ansteuerbare Komponente selektiert worden ist;
- eine Spracheingabe des Nutzers erfasst;
- mittels einer automatischen Spracherkennung und Interpretation der Spracheingabe ein die selektierte elektronisch ansteuerbare Komponente betreffender Sprachbefehl ermittelt; und
- die selektierte elektronisch ansteuerbare Komponente gemäß dem ermittelten Sprachbefehl angesteuert.

Das erfindungsgemäße Verfahren stellt eine optimierte Möglichkeit für den Fahrer, aber auch andere Fahrzeugnutzer, dar, elektronisch ansteuerbare Komponenten im Fahrzeug anzuwählen und mit diesen zu interagieren. Dieses kann durch die Kombination der Selektierung der elektronisch ansteuerbaren Komponente mittels Gestenerkennung und die Interaktion mit der selektierten elektronisch ansteuerbaren Komponente mittels Spracherkennung auf eine besonders einfache, schnelle und intuitive Weise erfolgen. So ermöglicht die Gestensteuerung eine schnelle Selektierung einer Komponente ohne dass der Nutzer die entsprechende Komponente in Reichweite haben muss oder eine Vielzahl von Bedienschaltern für die unterschiedlichsten Komponenten des Fahrzeugs in Nutzernähe vorgesehen werden müssen. Auch muss der Nutzer nicht die korrekte Bezeichnung der jeweiligen Komponente kennen, was bei einer reinen Sprachbedienung erforderlich wäre. Eine reine Gestensteuerung wiederum würde erfordern, dass aufgrund der Vielzahl der unterschiedlichen Bedienmöglichkeiten für die verschiedenen Komponenten auch eine Vielzahl unterschiedlicher Bediengesten durch den Nutzer erlernt werden müsste. Schließlich ist es nicht notwendig, dass der Nutzer die Sprachbedienung zunächst durch ein Aktivierungswort (englisch: "wake-up word") einschalten muss, da die Spracherkennung nach der gestengesteuerten Selektierung der Komponente automatisch gestartet werden kann. Die Interaktion wird dadurch schneller und kürzer.

Vorteilhafterweise wird hierbei eine Übersicht von verfügbaren Sprachbefehlen für die erkannte elektronisch ansteuerbare Komponente an den Nutzer ausgegeben.

Weiterhin ist es von Vorteil, wenn eine Information darüber, in welchem Zustand sich die erkannte elektronisch ansteuerbare Komponente aktuell befindet, ausgegeben wird.

Gemäß einer Ausführungsform der Erfindung wird hierbei die Information über die erkannte elektronisch ansteuerbare Komponente und/oder die Übersicht von verfügbaren Sprachbefehlen und/oder die Information über den aktuellen Zustand der erkannten elektronisch ansteuerbaren Komponente auf einem Display dargestellt.

Hierbei kann die Information über die erkannte elektronisch ansteuerbare Komponente vorzugsweise als Graphikelement auf dem Display dargestellt werden.

Gemäß einer weiteren Ausführungsform der Erfindung entsprechen die verschiedenen dargestellten Sprachbefehle verschiedenen möglichen Zuständen der erkannten elektronisch ansteuerbaren Komponente, wobei unterschiedliche Zustände der erkannten elektronisch ansteuerbaren Komponente durch unterschiedliche Einfärbungen der dargestellten Sprachbefehle kenntlich gemacht werden.

Entsprechend umfasst eine erfindungsgemäße Vorrichtung zur Bedienung von elektronisch ansteuerbaren Komponenten eines Fahrzeugs,
- eine Gestenerfassungseinheit, welche eine Zeigegeste eines in dem Fahrzeug befindlichen Nutzers in Richtung einer elektronisch ansteuerbaren Komponente erfasst;
- eine Eingabeeinheit zum Erfassen einer Spracheingabe des Nutzers;
- einer Sprachverarbeitungseinheit, die mittels einer automatischen Spracherkennung und Interpretation der erfassten Spracheingabe einen die elektronisch ansteuerbare Komponente betreffenden Sprachbefehl ermittelt; und
- eine Auswerte- und Steuereinheit, der von der Gestenerfassungseinheit Daten über die erfasste Zeigegeste und von der Sprachverarbeitungseinheit der ermittelte Sprachbefehl zugeführt werden, und die aus den zugeführten Daten über die erfasste Zeigegeste die elektronisch ansteuerbare Komponente ermittelt und die selektierte elektronisch ansteuerbare Komponente gemäß dem ermittelten Sprachbefehl ansteuert; und
- eine Ausgabeeinheit, mittels der an den Nutzer eine Information, welche elektronisch ansteuerbare Komponente selektiert worden ist, ausgebbar ist.

Gemäß einer Ausführungsform der Erfindung umfasst hierbei
- die Gestenerfassungseinheit einen Bild-, Radar- und/oder Ultraschallsensor; und/oder
- die Eingabeeinheit mindestens ein Mikrofon; und/oder
- die Ausgabeeinheit ein Display und/oder einen oder mehrere Lautsprecher.

Gemäß einer Ausführungsform der Erfindung ist hierbei das Display Bestandteil eines in dem Fahrzeug integrierten Infotainmentsystems.

Die Erfindung betrifft auch ein Kraftfahrzeug, in dem das erfindungsgemäße Verfahren oder die erfindungsgemäße Vorrichtung eingesetzt wird.

Weitere Merkmale der vorliegenden Erfindung werden aus der nachfolgenden Beschreibung und den Ansprüchen in Verbindung mit den Figuren ersichtlich.
- Fig. 1: zeigt schematisch ein Ablaufdiagramm eines erfindungsgemäßen Verfahrens zur Bedienung von elektronisch ansteuerbaren Komponenten eines Fahrzeugs;
- Fig. 2: zeigt schematisch einen Fahrzeugnutzer mit einem Blockschaltbild einer erfindungsgemäßen Vorrichtung;
- Fig. 3: zeigt eine grafische Benutzerschnittstelle eines Infotainmentsystems mit einem Popupfenster zur Ansteuerung einer Innenleuchte im Fahrzeug; und
- Fig. 4: zeigt das Popupfenster aus Fig. 3 mit einer unterschiedlichen Anzeige der verfügbaren Sprachbefehle je nach aktuellem Zustand.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

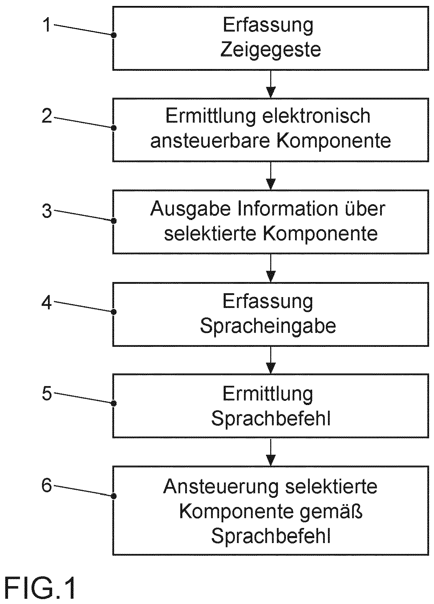

Figur 1 zeigt schematisch ein Ausführungsbeispiel für das erfindungsgemäße Verfahren zur Bedienung von elektronisch ansteuerbaren Komponenten eines Fahrzeugs. Die elektronisch ansteuerbaren Komponenten können hierbei beliebige Hardwareelemente im Fahrzeug sein, wie beispielsweise Innenleuchten, Lautsprecher, elektrische Verriegelungen von Fahrzeugtüren, elektrische Schiebetür- oder Heckklappensysteme, elektrisch verstellbare Außenspiegel oder Bildschirme im Fahrzeugfond. Hierbei können sich die elektronisch ansteuerbaren Komponenten insbesondere auch in einer Entfernung befinden, in der diese vom Nutzer nicht unmittelbar manuell bedient werden können, ohne seine gegenwärtige Position im Fahrzeug zu verändern.

Gemäß einem ersten Verfahrensschritt 1 wird mindestens ein Finger, insbesondere Zeigefinger, des Fahrzeugnutzers sensorisch erfasst und ausgewertet, ob der Fahrzeugnutzer eine Zeigegeste im Raum in Richtung einer elektronisch ansteuerbaren Komponente des Fahrzeugs ausführt. Optional kann hierbei vorab durch den Fahrzeugnutzer abgefragt werden, beispielsweise durch eine entsprechende Geste oder Spracheingabe, welche elektronisch ansteuerbaren Komponenten im Fahrzeug erfindungsgemäß angesteuert werden können.

Erfolgt durch den Nutzer eine Zeigegeste, so wird gemäß Verfahrensschritt 2 in einem Fahrzeugkoordinatensystem die Position und Ausrichtung des Fingers und daraus eine Raumrichtung im Fahrzeug ermittelt. Aus diesen Angaben kann dann in Verbindung mit einer digitalen Karte, in der ebenfalls in einem Fahrzeugkoordinatensystem die verschiedenen, elektronisch ansteuerbaren Komponenten mit ihren jeweiligen Koordinaten und räumlichen Ausdehnungen vermerkt sind, ermittelt werden, ob der Nutzer mit seiner Zeigegeste auf eine der Komponenten gezeigt hat. Dieses ist der Fall, wenn eine der ermittelten Raumrichtung entsprechende Gerade durch eine der vermerkten Komponenten verläuft oder, insbesondere bei kleinen Komponenten, nur um einen vordefinierten Winkel oder Abstand von einer dieser Komponenten abweicht.

Eine Information über die von dem Nutzer selektierte Komponente wird an diesen in einem Verfahrensschritt 3 ausgegeben. Dieses kann insbesondere durch eine Anzeige auf einem Display oder auch durch eine akustische Ausgabe über einen Lautsprecher erfolgen. Damit wird dem Nutzer eine Rückmeldung gegeben, dass basierend auf seiner Zeigegeste die Anwahl einer Komponente erfolgreich war und auch welche Komponente selektiert wurde. Weiterhin können an den Nutzer auch die Bedienmöglichkeiten für diese Komponente, d.h. die nach der Anwahl der Komponente für diese Komponente möglichen Sprachbefehle, ausgegeben werden, ebenso wie eine Information darüber, in welchem Zustand sich die Komponente zum gegenwärtigen Zeitpunkt befindet.

In Verfahrensschritt 4 wird dann eine Spracheingabe des Nutzers mittels eines oder mehrerer in dem Fahrzeug integrierter Mikrofone erfasst. Das so erfasste Audiosignal wird dann einer Vorverarbeitung zugeführt, in der das analoge Audiosignal zunächst digitalisiert wird. Durch eine anschließende Filterung werden Umgebungsgeräusche wie beispielsweise Motorengeräusche möglichst gut unterdrückt. Nach einer Transformation des gefilterten Signals in den Frequenzbereich werden dann Merkmalsvektoren mit aus dem transformierten Sprachsignal erzeugten Merkmalen generiert.

Anschließend findet in Verfahrensschritt 5 die eigentliche Erkennung des Sprachbefehls mit Hilfe akustischer Modelle, Wörterbücher und Sprachmodelle statt. Hierfür kann auf vordefinierte Vokabulare und vordefinierte Sprachbefehle zurückgegriffen werden, die in dem Fahrzeug vorinstalliert sind. Ebenso ist aber auch eine natürlich-sprachliche Bedienung möglich, wobei dann ggfs. das Sprachsignal des Nutzers mittels Datenfunkübertragung zu einer Erkennungssoftware auf einem hierfür vorgesehenen Server in der Cloud übertragen wird und der erkannte Sprachbefehl an das Fahrzeug zurückgesendet wird. Bei einer natürlich-sprachlichen Bedienung wird hierbei die Spracheingabe des Nutzers einer der für die jeweilige Komponente möglichen Sprachbefehle bzw. Zustände zugeordnet.

In Verfahrensschritt 6 wird dann die selektierte Komponente gemäß dem ermittelten Sprachbefehl angesteuert. Hierbei kann an den Nutzer eine Rückmeldung über die Ausführung des Sprachbefehls und die entsprechende Änderung des Zustands der Komponente ausgegeben werden.

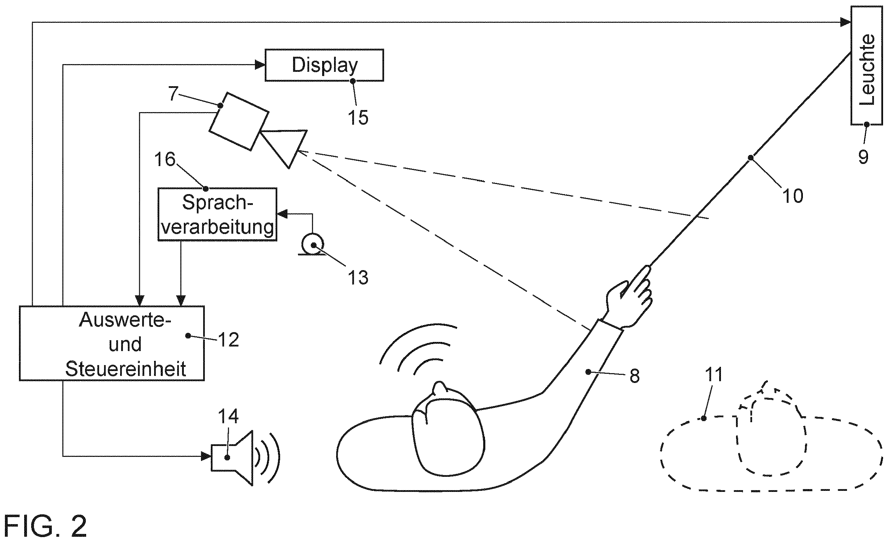

Figur 2 zeigt schematisch einen Fahrzeugnutzer 8 mit einem Blockschaltbild einer Ausführungsform einer erfindungsgemäßen Vorrichtung. Bei dem Fahrzeugnutzer handelt es sich in dem dargestellten Beispiel um den Fahrer des Fahrzeugs, schematisch ist neben diesem noch ein Beifahrer 11 angedeutet. Ebenso kann die erfindungsgemäße Vorrichtung aber auch von diesem Beifahrer oder einem anderen Fahrzeugnutzer genutzt werden. Bei der elektronisch ansteuerbaren Komponente 9 handelt es sich im dargestellten Beispiel um eine Innenleuchte, die über dem Beifahrer im Bereich der Beifahrertür angeordnet und deshalb für den Fahrer vom Fahrersitz schlecht zu erreichen ist.

Um die Innenleuchte zu bedienen, zeigt der Fahrer mit dem Zeigefinger seiner rechten Hand in Richtung der Innenleuchte. Dieses wird mit einer im Innenraum des Fahrzeugs angeordneten 3D-Kamera 7 erfasst. Die 3D-Kamera ist hierbei so im Innenraum verbaut, dass der Finger des Nutzers während einer Zeigegeste gut erfasst werden kann, beispielsweise in Bereichen des Armaturenbretts, der Mittelkonsole, des Rückspiegels oder des Dachhimmels. Vorzugsweise wird die 3D-Kamera im nahen Infrarotbereich betrieben, da dann auch bei Dunkelheit durch eine nicht dargestellte Infrarotbeleuchtung der Betrieb gewährleistet ist, ohne dass hierdurch der Fahrzeuginsasse gestört oder geblendet wird. Statt mit einer 3D-Kamera kann die Zeigegeste aber auch mit anderen geeigneten Sensoren erfasst werden, die eine ausreichende Genauigkeit aufweisen, wie beispielsweise Radarsensoren.

Die Bildsignale der 3D-Kamera 7 werden in dem dargestellten Beispiel zur Analyse einer Auswerte- und Steuereinheit 12 zugeführt, dieses kann aber ebenso durch eine separate oder auch eine in der 3D-Kamera integrierte Analyseeinheit erfolgen. Die Auswerte- und Steuereinheit 12 kann hierbei einen Mikroprozessor, einen internen elektronischen Speicher und eine oder mehrere elektrische Schnittstellen aufweisen.

Die Auswerte- und Steuereinheit 12 bestimmt durch eine Bildverarbeitung der Bildsignale, ob der Fahrzeuginsasse eine Zeigegeste im Raum in Richtung einer elektronisch ansteuerbaren Komponente des Fahrzeugs ausführt. Hierfür können aus den Bildsignalen Merkmale ermittelt werden, die dann mit entsprechenden, abgespeicherten Mustern von Händen bzw. Fingern, die eine Zeigegeste ausführen, verglichen werden. Wenn die Auswerte- und Steuereinheit 12 ermittelt, dass eine Zeigegeste ausgeführt wird, bestimmt sie aus dieser eine Raumrichtung 10 in einem Fahrzeugkoordinatensystem. Weiterhin fragt die Auswerte- und Steuereinheit 12 aus dem internen elektronischen Speicher eine digitale Karte, in der in dem Fahrzeugkoordinatensystem die verschiedenen, elektronisch ansteuerbaren Komponenten vermerkt sind, ab. Diese digitale Karte kann insbesondere während des Produktionsprozesses von dem Hersteller des Fahrzeugs in dem Speicher abgelegt worden sein. Basierend auf der ermittelten Raumrichtung und der digitalen Karte ermittelt die Auswerte- und Steuereinheit 12 dann, ob sich eine elektronisch ansteuerbare Komponente des Fahrzeugs in der ermittelten Raumrichtung befindet.

Wenn dieses der Fall ist, kann die elektronisch ansteuerbare Komponente unmittelbar angewählt werden. Es kann aber auch vorgesehen werden, dass diese Anwahl nur erfolgt, wenn der Fahrzeugnutzer mindestens für einen vordefinierten Zeitraum auf diese Komponente zeigt oder die Anwahl durch eine mittels des Fingers angedeuteten Klick- oder Doppelklick-Bewegung vornimmt.

Für die angewählte Komponente werden durch die Auswerte- und Steuereinheit 12 über eine Ausgabeeinheit oder mehrere Ausgabeeinheiten Informationen, insbesondere die für diese Komponente möglichen Sprachbefehle, an den Fahrzeugnutzer ausgegeben. So können die abgefragten Informationen über eine optische Anzeige auf einem Display 15 ausgegeben werden. Dieses kann beispielsweise auf dem Display eines im Fahrzeug integrierten Infotainmentsystems oder auch durch eine Einblendung mittels eines HUD-Displays erfolgen. Stattdessen oder zusätzlich kann auch eine akustische Ausgabe über einen oder mehrere Lautsprecher 14 im Fahrzeug erfolgen.

Weiterhin ist ein Mikrofon 13 zur Erfassung einer Spracheingabe des Nutzers vorgesehen. Das von dem Mikrofon 13 erfasste Audiosignal wird einer Sprachverarbeitungseinheit 16 zugeführt, die aus der Spracheingabe einen Sprachbefehl ermittelt und an die Auswerte- und Steuereinheit 12 ausgibt. Die Auswerte- und Steuereinheit 12 führt den ermittelten Sprachbefehl dann aus, indem sie die ausgewählte Komponente entsprechend ansteuert.

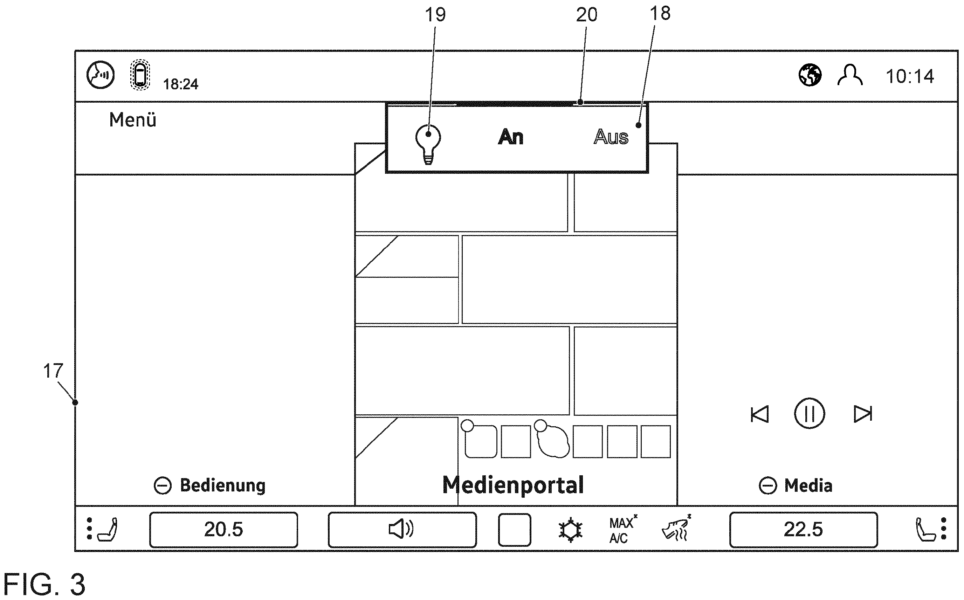

In Figur 3 wird eine grafische Benutzerschnittstelle 17 eines Infotainmentsystems dargestellt, dem für das Beispiel der gestengesteuerten Selektierung einer Innenleuchte im Fahrzeug ein Popupfenster 18 mit Informationen zur weiteren Bedienung überlagert wird.

Hat der Fahrzeugnutzer die Innenleuchte per Geste für eine darauf folgende Sprachsteuerung ausgewählt, so wird das Popupfenster 18 eingeblendet und in diesem ein Icon 19 in Form einer Glühbirne dargestellt. Auf diese Weise wird dem Nutzer bestätigt, dass eine Leuchte angewählt wurde. Weiterhin werden in dem Popupfenster 18 die zur Verfügung stehenden Sprachbefehle wiedergegeben. Im vorliegenden Fall ist für die Innenleuchte lediglich vorgesehen, dass diese an- bzw. ausgeschaltet werden kann, eine Veränderung zur Anpassung der Helligkeit der Leuchte ist dagegen nicht vorgesehen. Damit kann die Innenleuchte lediglich die Zustände "An" und "Aus" annehmen, sodass auch nur die hierfür entsprechende Sprachbefehle erforderlich sind und angezeigt werden. Statt durch die Worte "An" und "Aus" können diese Zustände auch durch geeignete Symbole, wie beispielsweise einen die "1" symbolisierenden senkrechten Strich oder einen die "0" symbolisierenden Kreis, dargestellt werden. Weiterhin kann zusätzlich eine Lichtleiste 20 eingeblendet werden, die den Fortschritt der Spracherkennung oder die verschiedenen Aktivitäten der Sprachbedienung wie "Zuhören" oder "Verarbeiten" an den Nutzer zurückmeldet.

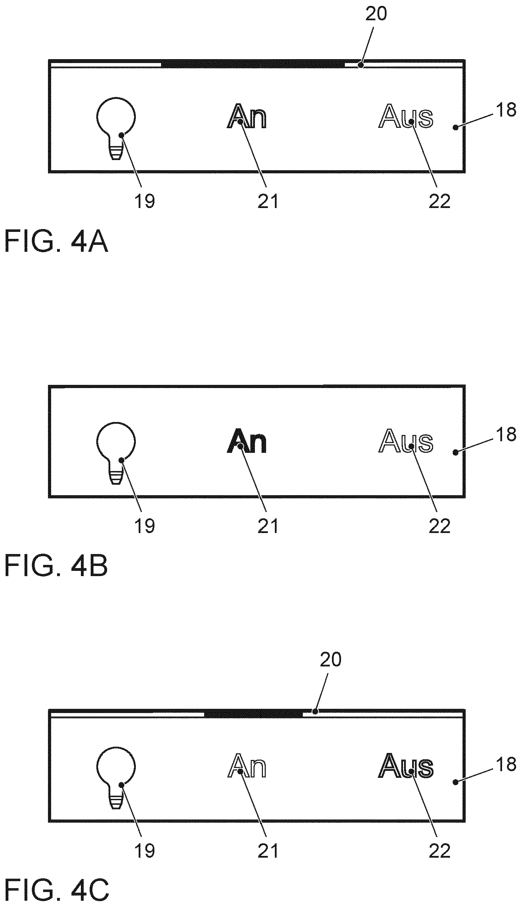

Durch eine geeignete Darstellung kann auch wiedergegeben werden, in welchem Zustand sich die Komponente gerade befindet. Dieses in Figur 4 schematisch dargestellt. So können beispielsweise je nach aktuellem Zustand unterschiedliche Einfärbungen erfolgen.

Wenn die Innenleuchte aktuell deaktiviert ist und ein Sprachbefehl zum Einschalten der Innenleuchte daher wählbar ist, kann gemäß Figur 4A beispielsweise der Schriftzug "An" in einer ersten Weise, beispielsweise in weißer Farbe, dargestellt werden und so dem Nutzer verdeutlichen, dass dieser Sprachbefehl zurzeit verfügbar ist. Der Schriftzug "Aus" wird in einer zweiten Weise, beispielsweise in grauer Farbe, dargestellt, da die Innenleuchte zurzeit aus ist und damit ein Sprachbefehl zum Ausschalten der Innenleuchte gegenwärtig nicht wählbar ist. Statt durch unterschiedliche Einfärbungen kann eine solche Unterscheidung aber auch auf andere Art, beispielsweise unterschiedliche Helligkeiten, unterschiedlich große Darstellungen oder eine dynamische Veränderung der wiedergegebenen Sprachbefehle erfolgen.

Äußert der Nutzer nun einen Sprachbefehl, wie beispielsweise "An" oder "Licht an" oder "Bitte Licht an" oder ähnliche Phrasen, so wird, wie in Figur 4B dargestellt, in dem Popupfenster der dem Sprachbefehl entsprechende Schriftzug zunächst in einer dritten Weise, beispielsweise in blauer Farbe, dargestellt, um den Nutzer darauf hinzuweisen, dass das System gegenwärtig noch mit der Spracherkennung beschäftigt ist.

Wird dann schließlich der Sprachbefehl ausgeführt und die Innenleuchte angeschaltet, so wird, wie in Figur 4C dargestellt, der Schriftzug "An" in der zweiten Weise, d.h. in grauer Farbe, dargestellt, da nun ein Sprachbefehl zum Einschalten der Innenleuchte nicht mehr wählbar ist. Entsprechend wird der Schriftzug "Aus" in der ersten Weise, d.h. in weißer Farbe, dargestellt, da der Sprachbefehl zum Ausschalten der Innenleuchte ab jetzt wählbar ist.

Da davon auszugehen ist, dass nach dieser Bedienung der Innenleuchte kurzfristig keine weitere Bedienung erfolgen wird, wird die Darstellung des Popupfensters im Anschluss beendet.

Das erfindungsgemäße Verfahren ist hierbei nicht nur bei elektronisch ansteuerbaren Komponenten anwendbar, bei denen lediglich zwischen zwei Zuständen gewechselt werden kann, sondern kann ebenso auch zur Regelung nicht-binäre Zustände genutzt werden.

So kann bei einer Innenleuchte nicht nur vorgesehen sein, dass diese an- bzw. ausgeschaltet werden kann, sondern zusätzlich auch, dass für diese im Zustand "An" mit Sprachbefehlen wie "Heller" bzw. "Dunkler" die Helligkeit reguliert werden kann. Hierbei kann durch eine Anzeige der Sprachbefehle "Heller" bzw. "Dunkler" der Nutzer darauf hingewiesen werden, dass eine Veränderung der Helligkeit per Sprache möglich ist. Stattdessen oder zusätzlich kann für die Innenleuchte eine Skala des Helligkeitszustandes eingeblendet werden, die dem Nutzer neben der Verfügbarkeit der Helligkeitsregulierung per Sprache auch eine Rückmeldung darüber gibt, ob und in welchem Maße die Helligkeit ausgehend von der aktuellen Lichtintensität verändert werden kann.

Eine solche Regelung ist nicht auf die nur beispielhaft genannte Innenleuchte beschränkt. Vielmehr können auf gleiche Weise auch andere Funktionen elektronisch ansteuerbarer Komponenten, nach Ihrer Selektion per Geste, mittels Sprache reguliert werden, wie beispielsweise die Lautstärke bei der Wiedergabe von Medien, Navigationshinweisen oder Telefonanrufen, oder die Temperatur der Klimaanlage.

Es kann auch vorgesehen werden, mit einem Sprachbefehl zu der selektierten Komponente Informationen zu weiteren Bedienoptionen, die nicht durch eine Sprachbedienung erfolgen können, auszugeben. Die Verfügbarkeit solcher Informationen kann hierbei gegebenenfalls durch ein geeignetes Grafikelement verdeutlicht werden.

Die Erfindung kann in beliebigen Bereichen der Fahrzeugtechnik eingesetzt werden.

### Bezugszeichenliste

- 1: Erfassung Zeigegeste
- 2: Ermittlung elektronisch ansteuerbare Komponente
- 3: Ausgabe Information über selektierte Komponente
- 4: Erfassung Spracheingabe
- 5: Ermittlung Sprachbefehl
- 6: Ansteuerung selektierte Komponente gemäß Sprachbefehl
- 7: Gestenerfassungseinheit
- 8: Fahrzeugnutzer
- 9: elektronisch ansteuerbare Komponente
- 10: Raumrichtung in Richtung der elektronisch ansteuerbaren Komponente
- 11: Beifahrer
- 12: Auswerte- und Steuereinheit
- 13: Mikrophon
- 14: Lautsprecher
- 15: Display
- 16: Sprachverarbeitungseinheit
- 17: grafische Benutzerschnittstelle eines Infotainmentsystems
- 18: Popupfenster mit Übersicht für selektierte Komponente
- 19: Graphikelement für selektierte Komponente
- 20: Lichtleiste
- 21, 22: Verfügbare Sprachbefehle für selektierte Komponente

## Patentansprüche

1. Verfahren zur Bedienung von elektronisch ansteuerbaren Komponenten eines Fahrzeugs, bei dem
- eine Zeigegeste eines in dem Fahrzeug befindlichen Nutzers in Richtung einer elektronisch ansteuerbaren Komponente sensorisch erfasst (1) wird;
- aus der erfassten Zeigegeste die elektronisch ansteuerbare Komponente ermittelt (2) wird;
- eine Information an den Nutzer ausgegeben (3) wird, welche elektronisch ansteuerbare Komponente selektiert worden ist;
- eine Spracheingabe des Nutzers erfasst (4) wird;
- mittels einer automatischen Spracherkennung und Interpretation der Spracheingabe ein die selektierte elektronisch ansteuerbare Komponente betreffender Sprachbefehl ermittelt (5) wird; und
- die selektierte elektronisch ansteuerbare Komponente gemäß dem ermittelten Sprachbefehl angesteuert (6) wird.

2. Verfahren nach Anspruch 1, wobei eine Übersicht von verfügbaren Sprachbefehlen für die erkannte elektronisch ansteuerbare Komponente an den Nutzer ausgegeben wird.

3. Verfahren nach Anspruch 1 oder 2, wobei eine Information darüber, in welchem Zustand sich die erkannte elektronisch ansteuerbare Komponente aktuell befindet, ausgegeben wird.

4. Verfahren nach einem der vorhergehenden Ansprüche, wobei die Information über die erkannte elektronisch ansteuerbare Komponente und/oder die Übersicht von verfügbaren Sprachbefehlen und/oder die Information über den aktuellen Zustand der erkannten elektronisch ansteuerbaren Komponente auf einem Display dargestellt wird.

5. Verfahren nach Anspruch 4, wobei die Information über die erkannte elektronisch ansteuerbare Komponente als Graphikelement auf dem Display dargestellt wird.

6. Verfahren nach Anspruch 4 oder 5, wobei die verschiedenen dargestellten Sprachbefehle verschiedenen möglichen Zuständen der erkannten elektronisch ansteuerbaren Komponente entsprechen und unterschiedliche Zustände der erkannten elektronisch ansteuerbaren Komponente durch unterschiedliche Einfärbungen der dargestellten Sprachbefehle kenntlich gemacht werden.

7. Vorrichtung zur Bedienung von elektronisch ansteuerbaren Komponenten eines Fahrzeugs, mit
- einer Gestenerfassungseinheit (7), welche eine Zeigegeste eines in dem Fahrzeug befindlichen Nutzers in Richtung einer elektronisch ansteuerbaren Komponente erfasst;
- einer Eingabeeinheit (13) zum Erfassen einer Spracheingabe des Nutzers;
- einer Sprachverarbeitungseinheit (16), die mittels einer automatischen Spracherkennung und Interpretation der erfassten Spracheingabe einen die elektronisch ansteuerbare Komponente betreffenden Sprachbefehl ermittelt;
- einer Auswerte- und Steuereinheit (12), der von der Gestenerfassungseinheit Daten über die erfasste Zeigegeste und von der Sprachverarbeitungseinheit der ermittelte Sprachbefehl zugeführt werden, und die aus den zugeführten Daten über die erfasste Zeigegeste die elektronisch ansteuerbare Komponente ermittelt und die selektierte elektronisch ansteuerbare Komponente gemäß dem ermittelten Sprachbefehl ansteuert; und
- einer Ausgabeeinheit (14, 15), mittels der an den Nutzer eine Information, welche elektronisch ansteuerbare Komponente selektiert worden ist, ausgebbar ist.

8. Vorrichtung nach Anspruch 7, wobei
- die Gestenerfassungseinheit (7) einen Bild-, Radar- und/oder Ultraschallsensor; und/oder
- die Eingabeeinheit (13) mindestens ein Mikrofon; und/oder
- die Ausgabeeinheit ein Display (15) und/oder einen oder mehrere Lautsprecher (14) umfasst.

9. Vorrichtung nach Anspruch 8, wobei das Display (15) Bestandteil eines in dem Fahrzeug integrierten Infotainmentsystems ist.

10. Kraftfahrzeug, das eingerichtet ist, ein Verfahren gemäß einem der Ansprüche 1 bis 6 auszuführen oder eine Vorrichtung gemäß einem der Ansprüche 7 bis 9 aufweist.
